# EUROPEAN PATENT APPLICATION

(11) **EP 1 039 149 A1**
(43) Date of publication of application: **27.09.2000**
(21) Application number: 00660051.4
(22) Date of filing: 13.03.2000
(51) Int. Cl.: F16B 7/14, B63H 16/04

(54) **Locking mechanism between telescopically insertable tubes**

(30) Priority: 22.03.1999 FI 990634
(71) Applicant: Exel Oyj, 52701 Mäntyharju (FI)
(72) Inventor: Manninen, Taisto, 52700 Mäntyharju (FI)
(74) Representative: LEITZINGER OY

(57) **Abstract**

The invention relates to a locking mechanism between telescopically insertable tubes (1, 3). Secured as an extension for the end of the outer tube (1) are axially extending, pliable locking tongues (4) surrounded by a twistable clamping sleeve (2). The clamping sleeve (2) has its inner surface provided with circumferentially successive eccentric areas (2a) for pressing the locking tongues (4) radially inward as the clamping sleeve (2) is being twisted to the locking position.

## Description

The invention relates to a locking mechanism between telescopically insertable tubes, said tubes together constituting a telescope shaft of adjustable length, comprising at least one inner tube and at least one outer tube, and a locking mechanism having a first position, the release position, in which the tubes slide within each other for a stepless length adjustment of the telescope shaft, and said locking mechanism having a second position, the locking position, in which the tubes are immobilized relative to each other by frictional locking, whereby the telescope shaft retains its adjusted length, the locking mechanism comprising a twistable clamping sleeve which has its inner surface provided with eccentric areas offset from the circumferentially extending circular line.

This type of locking mechanism is known from the Application print GB-2238572 A. This prior known locking mechanism comprises between the clamping sleeve and the inner tube an eccentric collar which, upon twisting the clamping sleeve, moves towards the inner tube and presses an intermediate friction ring against the inner tube. This prior known locking mechanism includes a multitude of separate and independent elements and, hence, is inconvenient to manufacture and assemble. Another drawback is a small gripping surface of frictional locking as the friction locking ring has its compression force applied only to one side of the inner tube.

It is an object of the invention to provide an improved locking mechanism, which has structural elements as few as possible and which enables the accomplishment of a more uniform distribution of clamping force around the inner tube. In addition, the locking mechanism must be convenient and quick to operate for opening and closing the locking engagement.

This object is achieved by means of the invention on the basis of the characterizing features set forth in the annexed claim 1. The non-independent claims disclose preferred embodiments for the invention.

The connecting mechanism of the invention for tube elements in telescope shafts is easy to use and enables disassembly of the tube elements of a telescope shaft for transport and storage.

One application of the invention comprises an exercise pole, featuring more versatile operating characteristics than currently available poles, particularly an easy stepless adjustment of length depending on a user and a gymnastic exercise.

Since the length of an exercise pole fitted with a locking mechanism of the invention is adjustable for a variety gymnastic exercises, it is preferred that operating instructions be printed directly on the pole surface as symbols, whereby the operating instructions are always available as the pole is used.

A preferred material for the exercise pole is reinforced plastic, which is light, durable, mechanically strong, and readily dyeable.

Other preferred applications for a locking mechanism of the invention include shafts for implements (e.g. handles for cleaning and window-washing equipment) and paddle shafts. It is preferred also in these applications that the shaft tubes be constructed from reinforced plastic, i.e. composite plastic.

One embodiment of the invention will now be described in more detail by way of example, with reference made to the accompanying drawing, in which
- fig. 1: shows an exercise pole fitted with a locking mechanism of the invention, in a side view and in its shortest working position;
- fig. 2: shows the middle section of the exercise pole shown in fig. 1, in an extended condition of the pole;
- fig. 3: shows a locking mechanism present at the end of an outer tube 1, having its clamping sleeve 2 depicted in a longitudinal section;
- fig. 4: shows a section taken along a line IV-IV in fig. 3, and
- fig. 5: shows the end of an inner tube 3.

In the depicted case, the exercise pole comprises two outer telescopic tubes 1, and therebetween a single inner telescopic tube 3 having its opposite ends 7 telescoping within the outer telescopic tubes 1. Naturally, the pole may also be a two-piece device, but the advantage of a three-piece design is a symmetrical structure and a shorter length of individual tube sections, the storage and transport of a disassembled pole taking up less space.

A locking mechanism 2, 2a, 4 between the telescopic tubes 1, 3 is constructed in such a way that, as the clamping sleeve 2 is twisted in a release direction (open), the tubes 1, 3 slide lengthwise within and relative to each other for a stepless length adjustment of the telescope shaft.

By twisting the clamping sleeve 2 in the opposite direction (close), the tubes 1, 3 can be locked by frictional locking to immobilize the same relative to each other, whereby the telescope shaft retains its adjusted length. The locking mechanism of the invention is readily capable of providing a frictional locking, which resists a change in the length of the telescope shaft with a force of more than 50 kg, preferably with a force of more than 80 kg.

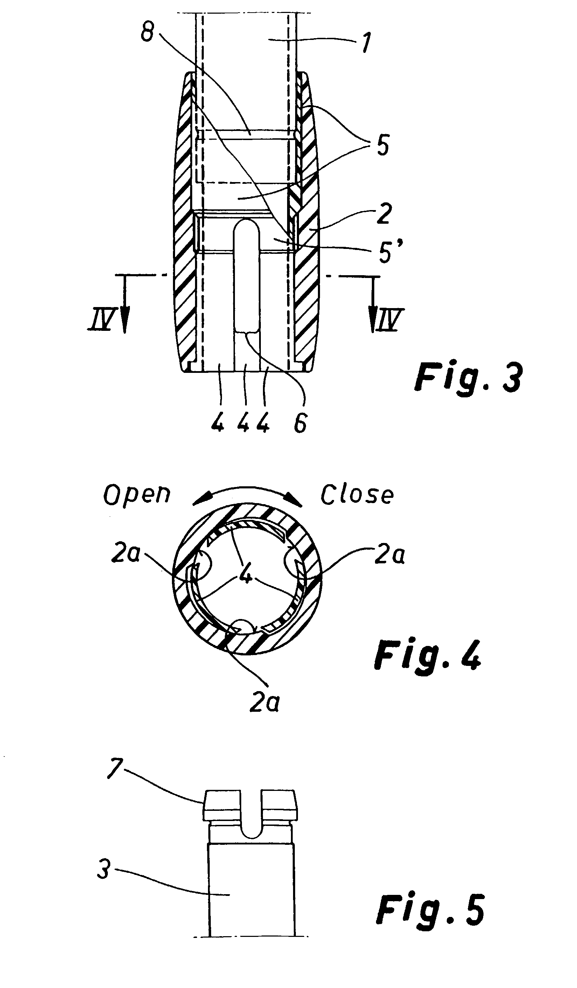

The locking mechanism is depicted in more detail in figs. 3 and 4. The twistable clamping sleeve 2 has its inner surface provided with eccentric areas 2a offset from the circumferentially extending circular line, the number of which in the present case is three in circumferential succession. Inside the clamping sleeve 2 are axially extending locking tongues 4 substantially in the shape of cylindrical surface segments, the inner surface thereof surrounding with a loose running fit the inner telescopic tube 3, when the clamping sleeve 2 is in a release position. When the clamping sleeve 2 is twisted to a locking position, the eccentric areas 2a press the locking tongues 4 radially inward for said frictional locking.

The locking tongues 4 connect integrally with an engagement ring 5, which is permanently secured, e.g. by direct injection moulding, around the end of the outer telescopic tube 1. The end of the tube 1 is provided with e.g. a groove 8, whereby the engagement ring 5 is firmly secured to the tube 1. In the transitional area between the engagement ring 5 and the tongues 4, the outer surface of a bushing constituted by these elements 5 and 4 is provided with an annular reducing pass 5', which is reached by slots 6 separating the tongues 4 from each other. The reducing pass 5' has a function of enabling a more sensitive deflection of the tongues 4 as the clamping sleeve 2 is being twisted to the locking position.

Fig. 5 shows an endplug 7 for the inner tube 3, which uses friction grip to prevent an unintentional disengagement of the tube sections 1 and 3 from each other, yet enables the disengagement through a minor application of force. The plug 7 has a conical surface for guiding insertion of the end of the tube 3 through the locking mechanism inside the tube 1. The plug 7 is provided with slots (e.g. 4 slots at a spacing of 90°), which provide an appropriate flexibility for the plug 7 not to get jammed while being inserted or extracted through the locking mechanism into or out of the tube 1. Regarding its outer diameter, the plug 7 is slightly larger than the inner diameter of the outer tube 1 for providing between the tubes a friction grip which is slidable by a minor use of force.

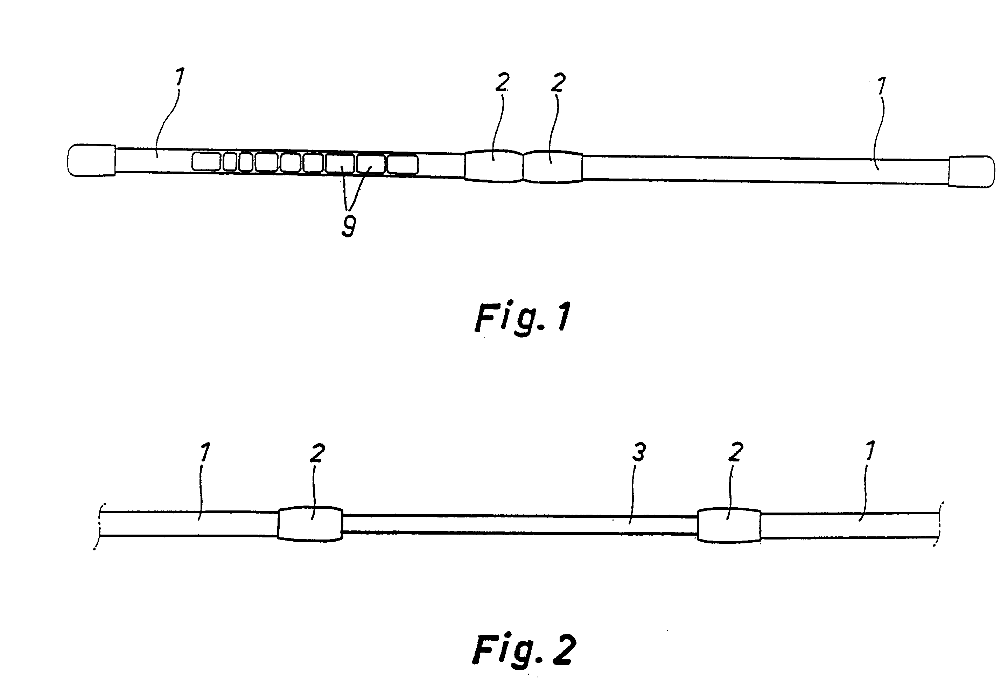

In fig. 1, reference numeral 9 designates image frames, each of which may be provided with a symbol to display a position of the exercise pole with respect to a user, as well as a posture of the user. By means of operating instructions, the adjustment of the exercise pole length can be more effectively exploited to accommodate diverse and versatile gymnastic exercises.

In all applications of the invention, the outer tube 1 near the clamping sleeve 2 can be printed with an operating instruction for the locking mechanism, which uses e.g. a symbolic image to demonstrate twisting of the clamping sleeve, while maintaining a hold on the outer tube 1.

## Claims

1. A locking mechanism between telescopically insertable tubes (1, 3), said tubes (1, 3) together constituting a telescope shaft of adjustable length, comprising at least one inner tube (3) and at least one outer tube (1), and a locking mechanism (2, 2a, 4) having a first position, the release position, in which the tubes (1, 3) slide within and relative to each other for a stepless length adjustment of the telescope shaft (1, 3), and said locking mechanism having a second position, the locking position, in which the tubes (1, 3) are immobilized relative to each other by frictional locking, whereby the telescope shaft (1, 3) retains its adjusted length, the locking mechanism comprising a twistable clamping sleeve (2) which has its inner surface provided with eccentric areas (2a) offset from the circumferentially extending circular line, characterized in that the locking mechanism further comprises
- axially extending locking tongues (4), present inside the clamping sleeve (2) and substantially in the shape of cylindrical surface segments, between which are axially extending slots (6) and the inner surface of which surrounds the inner telescopic tube (3) with a loose running fit, said eccentric areas (2a) pressing the locking tongues (4) radially inward as the clamping sleeve (2) is being twisted to the locking position, and
- an engagement ring (5), from one end of which extend said locking tongues (4) and which is permanently secured around the end of the outer telescopic tube (1).

2. An exercise pole provided with a locking mechanism as set forth in claim 1, characterized in that the pole comprises two outer telescopic tubes (1), and therebetween a single inner telescopic tube (3) having opposite ends (7) which are insertable within said outer telescopic tubes (1), and that the outer telescopic tubes (1 ) have each proximal end thereof provided with a locking mechanism (2, 2a, 4).

3. An exercise pole as set forth in claim 2, characterized in that the pole surface is printed with operating instructions (9) in the form of symbols representative of working positions for the pole.

4. An implement shaft provided with a locking mechanism as set forth in claim 1.

5. A paddle shaft provided with a locking mechanism as set forth in claim 1.

6. An exercise pole, an implement shaft, or a paddle shaft provided with a locking mechanism as set forth in claim 1, characterized in that the tubes (1, 3) are made of reinforced plastic.
